# EUROPEAN PATENT SPECIFICATION

(11) **EP 3 598 713 B1**
(45) Date of publication and mention of the grant of the patent: **07.06.2023**
(21) Application number: 18184480.4
(22) Date of filing: 19.07.2018
(51) Int. Cl.: H04L 9/40

(54) **ESTABLISHING A SECURE COMMUNICATION IN AN INDUSTRIAL CONTROL ENVIRONMENT**
AUFBAU EINER SICHEREN KOMMUNIKATION IN EINER INDUSTRIELLEN STEUERUNGSUMGEBUNG
ÉTABLISSEMENT D'UNE COMMUNICATION SÉCURISÉE DANS UN ENVIRONNEMENT DE COMMANDE INDUSTRIEL

(43) Date of publication of application: 22.01.2020
(73) Proprietor: CODESYS Holding GmbH, 87439 Kempten (DE)
(72) Inventor: Schaber, Markus, 87435 Kempten (DE)
(74) Representative: Kretschmann, Dennis

(56) References cited:
- EP-A1- 2 779 712
- EP-A2- 2 660 669
- WO-A2-2007/103222

## Description

### Field of the Invention

The disclosure relates to techniques for establishing a secure communication between an industrial controller system and a communication partner unit in an industrial control environment, such as to reduce the risk of potential attacks on the industrial controller system.

### Background

Industrial controller systems are ubiquitous in modern-day manufacturing, and typically run an industrial control program that is adapted to control an associated machinery or exchange instructions and data with the associated machinery. In order to make efficient use of the industrial controller system and to enhance the user comfort, it is desirable that the industrial controller system can be accessed remotely via a communication network. For instance, the user may want to update the industrial controller system with new control software or new parameter sets via the communication network. Moreover, the industrial controller system may exchange data with a communication partner unit over the communication network, wherein the communication partner unit may be a central management unit, another industrial controller system or a database. The communication network may be a proprietary network, but may also be a public network, such as the internet.

While the possibility of communicating with the industrial controller system remotely enhances the operability and user comfort, it also makes the industrial controller system vulnerable to potential attacks, such as unauthorized access or viruses. In state-of-the-art communication protocols, industrial controller systems typically take the server role in communication, and therefore need to validate every incoming communication attempt. Each open communication endpoint is a potential attack vector. This is particularly true as operating systems and firmware/ software on industrial controller systems are sometimes not updated as regularly as normal office PCs.

EP 2 779 712 A1 discloses techniques for configuring secure wireless networks in which a security management device initially behaves as a wireless client to identify and seek to connect with a new device functioning as an access point device. The security management device and the new device exchange a secure key to generate a secure connection. Subsequently, both the security management device and the new device reboot, and establish a secure connection by means of the exchanged key in which the new device operates as a wireless client and the security management device is the access point device.

EP 2 660 669 A2 discloses techniques for secure operation of an industrial controller in which the industrial controller may selectively operate in different modes, including an "open mode" in which the industrial controller may receive instructions via unauthenticated network connections, and a "secure mode" in which the industrial controller receives instructions only via an authenticated network connection.

WO 2007/103222 A2 pertains to a supervisory control and data acquisition (SCADA) system in which a control host communicates with a remote device over a communication line via a modem. A security module is coupled between the modem and the remote device and is configured to control access to the remote device.

What is needed is an improved method and system for establishing secure communication between an industrial controller system and a communication partner that protects the industrial controller system efficiently against unauthorized access or computer malware while still supporting standardized communication protocols.

### Overview of the Invention

This objective is addressed with a method for establishing secure communication according to independent claim 1, a computer program according to independent claim 6, and an industrial controller system according to independent claim 7. The dependent claims relate to preferred embodiments.

In a first aspect, the invention relates to a method for establishing a secure communication between an industrial controller system and a communication partner unit over a communication link, the method comprising: in an initialization phase, establishing a bidirectional communication channel between the industrial controller system and the communication partner unit, wherein establishing the bidirectional communication channel comprises the industrial controller system initiating an outgoing communication to the communication partner unit over the communication link; and, in an operation phase subsequent to the initialization phase, the industrial controller system operates as a server when communicating with the communication partner unit employing the established communication channel.

According to the method, in the initialization phase it is the industrial controller system that establishes the bidirectional communication channel by initiating an outgoing communication to the communication partner unit over the communication link. This may be contrary to established communication protocols, in which the industrial controller system is assigned the server role, and establishing the bidirectional communication channel may require the industrial controller system to respond to an initiating incoming communication from the communication partner unit. By turning this around in the initialization phase, the method may reduce the vulnerability of the industrial controller system to unauthorized access or malware from an untrustworthy communication partner unit. In the operation phase subsequent to the initialization phase, the industrial controller system may then switch to its usual server role when communicating with the communication partner unit over the established communication channel, which allows for established protocols to be used in the communication between the industrial controller system and the communication partner unit.

In the context of the present disclosure, the industrial controller system may be any system adapted to run industrial control software, such as in the form of compiled industrial control software or ladder logic instructions, and/or control an industrial process or machinery.

For instance, the industrial controller system may comprise at least one industrial controller unit, or may be an industrial controller unit.

In an example, the industrial controller system comprises a plurality of industrial controller units, and a gateway unit connected to the plurality of industrial controller units.

For instance, the gateway unit may initiate the outgoing communication to the communication partner unit over the communication link on behalf of the plurality of industrial controller units.

A communication partner unit, in the sense of the present disclosure, may be any unit adapted to communicate with the industrial controller system over the communication link.

In some examples, the communication partner unit comprises another industrial controller system, or a central management or monitoring system, or a database.

According to an example, the communication partner unit comprises a SCADA (Supervisory Control and Data Acquisition) system and/or a gateway unit and/or a proxy server.

In some examples, the communication partner unit is implemented in hardware. In other examples, the communication partner unit is implemented in software or firmware. In still other examples, the communication partner unit is implemented partly in hardware and partly in software or firmware.

A communication link, in the context of the present disclosure, may be any signal connection or data connection between the industrial controller system and the communication partner unit that allows the industrial controller system and the communication partner unit to exchange signals or data. For instance, the communication link may be part of a proprietary or public communication network, and may comprise wired or wireless connections. The communication link may involve electric signals and/or optical signals, or any other signal carrier.

According to an embodiment, the industrial controller system operates as a client when communicating with the communication partner unit in the initialization phase.

This exchanges the roles or communication functionalities that the industrial controller system and communication partner unit typically hold in a communication environment.

According to an embodiment, in the initialization phase the industrial controller system blocks any incoming communication over the communication link, such as by means of a firewall. This allows to efficiently protect the industrial controller system against attacks or malware.

In an alternative or variant mode of operation, in the initialization phase the industrial controller system may accept an incoming communication only upon receiving a corresponding user instruction.

For instance, the user instruction may pertain to a list of exceptions that can be pre-stored in the industrial controller system, or can be provided to the industrial controller system by the user.

In some examples, the user instruction may pertain to a general clearance of all incoming communication during a limited time window in the initialization phase. This allows establishing a communication channel with the communication partner unit during the initialization phase using standard communication protocols. However, since the initialization phase is limited in time, and subsequent incoming communication may be blocked, the risk of exposing the industrial controller system to unauthorized access or malware is likewise reduced significantly.

According to an embodiment, the method comprises switching the industrial controller system from a client functionality with respect to the communication partner unit in the initialization phase to a server functionality with respect to the communication partner unit in the operation phase.

Hence, in the operation phase the industrial controller system may rely exclusively on the trusted established communication channels, and exposure to unauthorized access or malware can be minimized throughout the operation of the industrial controller system.

The operation phase may be a phase that follows the initialization phase, after all the bidirectional communication channels to a plurality of communication partner units on which the operation of the industrial controller system relies have been established. The operation phase may correspond to a normal or routine operation of the industrial controller system in an industrial control environment.

In case an established communication channel or a communication link fails in the operation phase, the method according to the invention may revert to the initialization phase to re-establish a bidirectional communication channel.

According to an embodiment, the industrial controller system selects the communication partner unit according to an instruction, and initiates the outgoing communication to the selected communication partner unit.

For instance, the instruction may be a pre-stored instruction, such as list of communication partners stored in a database.

In other examples, the instruction may be received from a user.

The techniques of the invention have been described above mostly from the perspective of the industrial controller system. However, the invention may likewise be characterized from the complementary perspective of the communication partner unit that communicates with the industrial controller sytem.

Hence, in a second aspect the invention relates to a method for establishing a secure communication channel between an industrial controller system and a communication partner unit over a communication link, the method comprising: in an initialization phase, establishing a bidirectional communication channel between the industrial controller system and the communication partner unit, wherein in the initialization phase the communication partner unit receives an initializing communication from the industrial controller system over the communication link; and in an operation phase subsequent to the initialization phase, the communication partner unit operates as a client when communicating with the industrial controller system employing the established communication channel.

According to an embodiment, the communication partner unit operates as a server when communicating with the industrial controller system in the initialization phase.

This reverses the conventional roles of the industrial controller system and the communication partner unit in establishing a bidirectional communication channel.

In particular, according to an embodiment, the communication partner unit does not initiate an outgoing communication to the industrial controller system over the communication link in the initialization phase.

Rather, the communication partner unit may wait for an incoming communication from the industrial controller system for establishing a bidirectional communication channel in the initialization phase.

According to an embodiment, the method comprises switching the communication partner unit from a server functionality with respect to the industrial controller system in the initialization phase to a client functionality with respect to the industrial controller system in the operation phase.

According to an example, the communication partner unit addresses the industrial controller system via the established communication channel in the operation phase, in particular solely via the established communication channel in the operation phase.

The disclosure further relates to a computer program or to a computer program product comprising computer-readable instructions, wherein the computer-readable instructions are adapted, when read on a computer, to implement a method with some or all of the features described above.

In the first aspect, the disclosure further relates to an industrial controller system, comprising: a communication unit adapted to establish a bidirectional communication channel to a communication partner unit in an initialization phase by initiating an outgoing communication to the communication partner unit over a communication link; wherein the industrial controller system is adapted to operate as a server when communicating with the communication partner unit employing the established communication channel in an operation phase subsequent to the initialization phase.

The industrial controller system is adapted to, in the operation phase, accept an incoming communication that pertains to the established bidirectional communication channel; and the industrial controller system is further adapted to, in the operation phase, block any incoming communication that does not pertain to an established bidirectional communication channel.

According to an example, the communication unit may be realized in hardware. In other examples, the communication unit may be realized in software or firmware. In still other examples, the communication unit may be implemented partly in hardware and partly in software.

According to an example, the communication unit forms part of an industrial controller unit, or a gateway unit.

According to an embodiment, the communication unit may be adapted, in a first operating mode, to block any incoming communication over the communication link in the initialization phase.

In a second operating mode, the communication unit may be adapted to accept an incoming communication in the initialization phase only upon receiving a user instruction.

In an embodiment, the industrial controller system may be adapted to switch from a client functionality with respect to the communication partner unit in the initialization phase to a server functionality with respect to the communication partner unit in the operation phase.

According to an embodiment, the communication unit is adapted to accept, in the operation phase, an incoming communication that pertains to the established communication channel.

In particular, the communication unit may be adapted to accept, in the operation phase, only an incoming communication that pertains to the established communication channel.

The communication unit may be adapted to block, in the operation phase, an incoming communication that does not pertain to the established communication channel..

In an embodiment, the industrial controller system further comprises a selection unit, wherein the selection unit is adapted to select the communication partner unit according to an instruction, in particular according to a pre-stored instruction or an instruction received from a user.

The communication unit may be adapted to initiate the outgoing communication to the communication partner unit as selected by the selection unit.

In the second aspect, the disclosure further relates to a communication partner unit, comprising: a receiving unit adapted to receive, in an initialization phase, an initializing communication from an industrial controller system over a communication link for establishing a bidirectional communication channel between the communication partner unit and the industrial controller system; wherein the communication partner unit is adapted to operate as a client when communicating with the industrial controller system employing the established communication channel in an operation phase subsequent to the initialization phase.

According to an example, the receiving unit is not adapted to initiate an outgoing communication to the industrial controller system over the communication link in the initialization phase.

According to an embodiment, the communication partner unit is adapted to switch from a server functionality with respect to the industrial controller system in the initialization phase to a client functionality with respect to the industrial controller system in the operation phase.

The disclosure further relates to an industrial control communication environment, comprising the industrial controller system with some or all of the features disclosed above and the communication partner unit with some or all of the features described above, wherein the industrial controller system and the communication partner unit are connected via the bidirectional communication channel.

### Brief Description of the Figures

The features and numerous advantages of the techniques according to the present disclosure will be best apparent from a detailed description of exemplary embodiments with reference to the accompanying drawings, in which:
- Fig. 1: is a schematic illustration of an industrial control environment in which the techniques according to the present invention may be employed;
- Fig. 2: is a schematic illustration of an industrial controller system according to an embodiment;
- Fig. 3: is a schematic illustration of a communication partner unit according to an embodiment;
- Fig. 4: is a flow diagram illustrating a method for establishing a secure communication between an industrial controller system and a communication partner unit over a communication link according to an embodiment;
- Fig. 5: is a flow diagram that generally corresponds to the embodiment of Fig. 4, for the specific example of a reversed OPC UA connection;
- Fig. 6: is a flow diagram that generally corresponds to the embodiment of Fig. 4, for the specific example of a reversed ARTI3 connection;
- Fig. 7: is a flow diagram that generally corresponds to the embodiment of Fig. 4, for the specific example of a tunneled ARTI3 connection through a secure gateway;
- Fig. 8: is a flow diagram that generally corresponds to the embodiment of Fig. 4, for the specific example of a reversed HTTP connection that allows guarded access to a web visualization;
- Fig. 9: is a flow diagram illustrating a method according to an embodiment for establishing a secure communication between an industrial controller system and a communication partner unit from the perspective of the industrial controller system; and
- Fig. 10: is a flow diagram illustrating a method for establishing a secure communication between an industrial controller system and a communication partner unit from the complementary perspective of the communication partner unit.

### Description of Embodiments

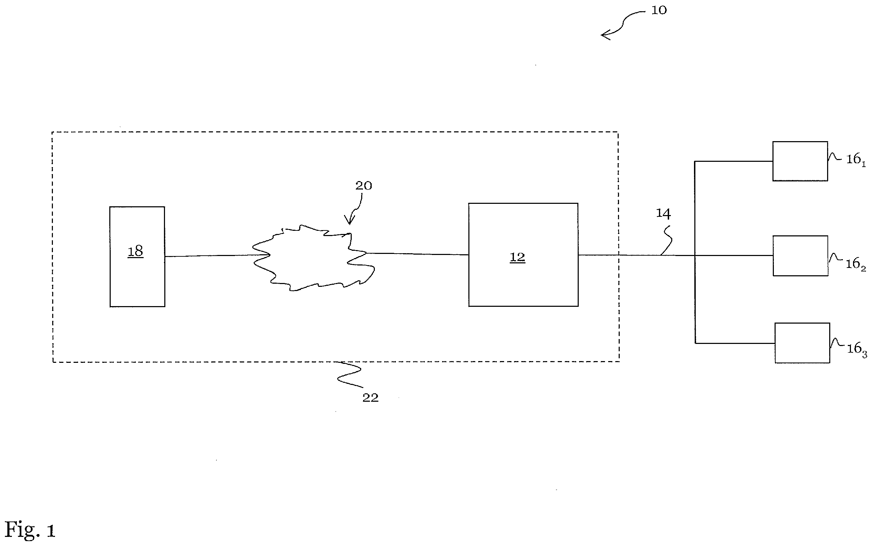

Fig. 1 is a schematic illustration of an industrial control environment 10 in which the method and techniques according to the present disclosure may be employed. For instance, the industrial control environment 10 may be a factory environment in which industrial control software is employed to control machinery for an industrial fabrication process.

The industrial control environment to comprises an industrial controller system 12 that is coupled via an industrial control network 14 to a group of machinery 16₁ to 16₃. The industrial controller system 12 may be an industrial controller unit that comprises a memory (not shown) and a processor (not shown) to store and run an industrial control program, such as a compiled industrial control program or ladder logic instructions. In accordance with the industrial control program, the industrial controller system 12 sends instructions to the machinery 16₁, 16₂, 16₃ via the industrial control network 14. In accordance with the instructions received from the industrial controller system 12 via the industrial control network 14, each of the machinery 16₁, 16₂, 16₃ may perform a dedicated manufacturing step.

In some examples, the industrial controller system 12 may also receive and process data from the machinery 16₁, 16₂, 16₃ via the industrial control network 14, such as data pertaining to an operating state of the machinery 16₁, 16₂, 16₃ or measurement data relating to the controlled industrial process.

The industrial control network 14 may be any public or proprietary network adapted to exchange data between the industrial controller system 12 and the machinery 16₁, 16₂, 16₃. In some examples, the industrial control network 14 may be or may comprise a field bus network.

Fig. 1 shows a simplified schematic industrial control environment with only three controlled machines 16₁, 16₂, 16₃. However, this is for illustration purposes only, and in some applications the industrial controller system 12 may control a large number of machinery.

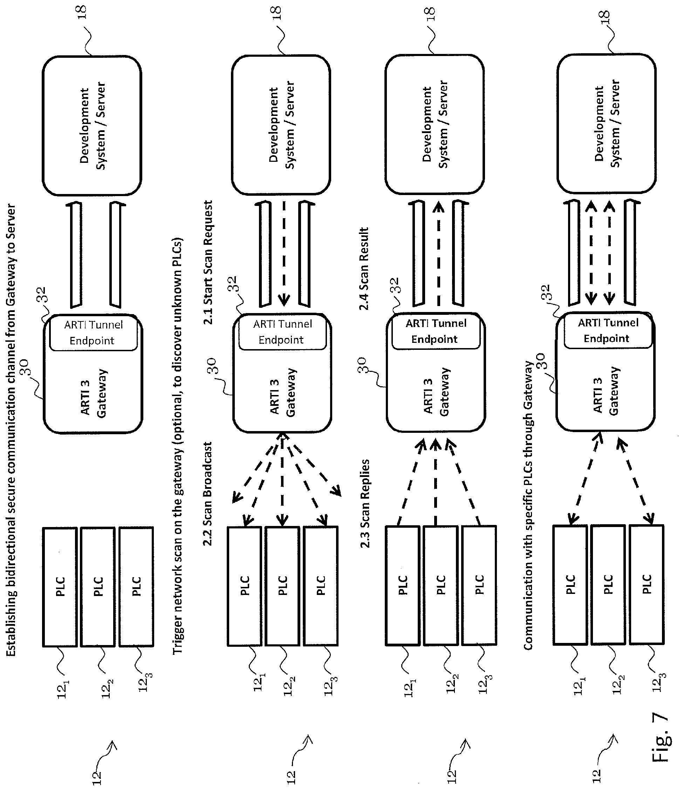

Moreover, in examples of the invention the industrial controller system 12 may comprise any number of industrial controller units, wherein each of the industrial controller units may be adapted to control a machinery or group of machinery or an industrial process in the way described above for the industrial controller system 12. A corresponding example is described further below with reference to Fig. 7

As can be further taken from Fig. 1, the industrial control environment 10 additionally comprises a communication partner unit 18 that is connected to the industrial controller system 12 via a communication link 20.

The communication partner unit 18 may be any device (implemented in hardware or software) with which the industrial controller system 12 may want to communicate in the context of performing its industrial control task. For instance, the communication partner unit 18 may be an external programming environment that is adapted to access the industrial controller system 12 via the communication link 20 to provide the industrial controller 12 with dedicated control programs or parameters for control programs.

In other examples, the communication partner unit 18 may comprise a monitoring unit adapted to monitor the functionality of the industrial controller system 12, or machinery 16₁, 16₂, 16₃, such as a SCADA system.

The communication link 20 may be any communication link that allows the communication partner unit 18 to communicate with the industrial controller system 12. In some examples, the communication link 20 is part of a proprietary or public network, such as the internet.

The schematic illustration of Fig. 1 shows the communication link 20 as different and distinct from the industrial control network 14. However, this is for convenience and ease of presentation only, and in some examples the communication link 20 may form part of the industrial control network 14.

The industrial controller system 12, communicating partner unit 18 and communication link 20 together form an industrial control communication environment 22, which is indicated in Fig. 1 by dashed lines. In the example of Fig. 1, the industrial control communication environment 22 comprises only a single communication partner unit 18 and a single communication link 20. However, this is for illustration only, and in some examples the industrial control communication environment 22 may comprise a plurality of communication partner units 18, which are adapted to communicate with the industrial controller system 12 via a common or separate dedicated communication links 20.

In a conventional industrial control communication environment 22, the industrial controller system 12 generally takes the server role in communication with the communication partner unit 18, and the communication partner unit 18 acts as a client with respect to the industrial controller system 12. As a consequence, in most existing protocols, the communication partner unit 18 opens a connection to the industrial controller system 12, such as in a HTTP protocol for web visualization, an OPC UA protocol to read and write variables, or proprietary protocols like ARTI3 for software download, debugging, etc. According to these established protocols, the industrial controller system 12 needs to validate every incoming communication attempt from a communication partner unit 18. Each such open communication endpoint is a potentially harmful attack vector, the more so since operating systems and firmware/software on industrial controller systems 12 are sometimes not as regularly updated as office personal computers.

The techniques according to the present disclosure address this problem by reversing the client-server relationship between the industrial controller system 12 and the communication partner unit 18 in an initialization phase for establishing a bidirectional communication channel between the industrial controller system 12 and the communication partner unit 18. During the initialization phase, restricting the communication of the industrial controller system 12 exclusively to outgoing connections reduces the attack surface of the industrial controller system 12. In particular, the industrial controller system 12 may have no open sockets and no concurrent connection attempts in the initialization phase. This may allow for particularly simple and secure firewall configuration settings between the industrial controller system 12 and the outside world (e.g., no incoming connections allowed at all).

As soon as the initialization phase has ended, i.e. once the bidirectional communication channel has been established, the industrial controller system 12 and the communication partner unit 18 may change their communication roles, so that the communication partner unit 18 acts as a client device to the industrial controller system 12 while communicating over the bidirectional communication channel according to the legacy communication protocol.

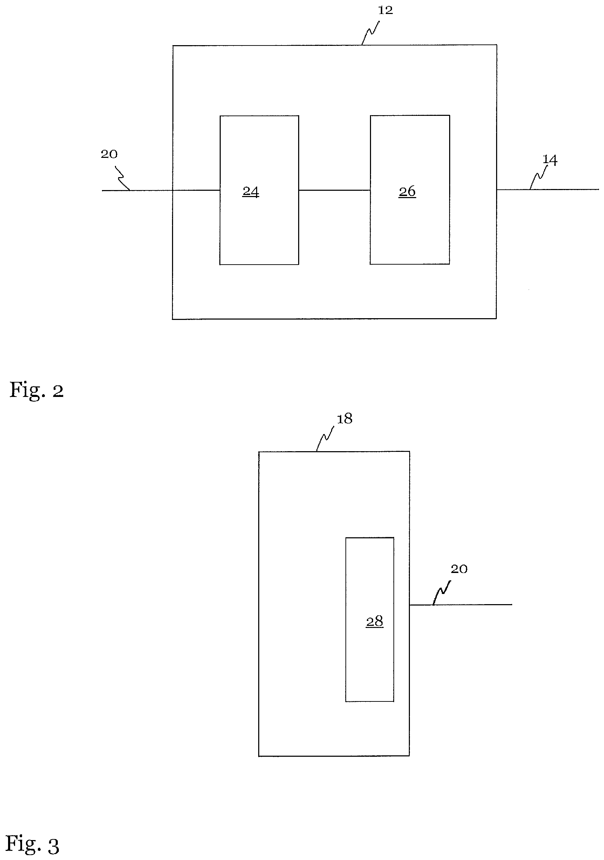

The configuration and functionality of an industrial controller system 12 will now be described in additional detail with reference to Fig. 2.

As can be taken from Fig. 2, the industrial controller system 12 according to an example comprises a communication unit 24 and a selection unit 26 that is communicatively coupled to the communication unit 24.

The selection unit 26 may be adapted to select, upon startup of the industrial controller system 12, the communication partner unit 18 or plurality of communication partner units 18 that are required for operation of the industrial controller system 12.

Many setups in practice are rather static, and hence the industrial controller system 12 may have a configured list of endpoints that it should try to connect with. These outgoing connections may be established according to the list when the industrial controller system 12 starts up, and they can be automatically re-established after a connection has failed.

In other examples, the selection unit 26 may select the communication partner unit 18 according to a dedicated user instruction received from a user when commissioning the industrial controller system 12.

The selection unit 26 may provide the communication unit 24 with data pertaining to the selected communication partner unit 18, and the communication partner unit 18 may be adapted to establish the bidirectional communication channel to the communication partner unit 18 in the initialization phase by initiating an outgoing communication to the selected communication partner unit 18 over the communication link 20.

During the initialization phase, the communication unit 24 may be adapted to block any incoming communication over the communication link 20, such as to prevent unauthorized access to the industrial controller system 12. For instance, the communication unit may comprise a firewall (not shown) that blocks unauthorized access to the industrial controller system 12. In other examples, the firewall may be located at an intermediate network node of the communication link 20.

After the bidirectional communication channel between the industrial controller system 12 and the selected communication partner unit 18 has been established, the industrial controller system 12 and/or communication unit 24 may switch from a client functionality with respect to the communication partner unit 18 to a server functionality to start the operation phase in which the industrial controller system 12 and communication partner unit 18 may communicate via the established communication channel using a legacy communication protocol.

In the operation phase, the communication unit 24 may be adapted to accept an incoming communication that pertains to the established communication channel, but may block an incoming communication that does not pertain to the established communication channel, such as by means of the firewall.

Fig. 2 shows the communication unit 24 and the selection unit 26 as two separate units. However, this is for illustration only, and in some examples the communication unit 24 and the selection unit 26 may be integrated into a common unit.

In some examples, the communication unit 24 and/or the selection unit 26 may be implemented in hardware. In other examples, the communication unit 24 and/or the selection unit 26 may be implemented in software or firmware. In still further examples, the communication unit 24 and/or the selection unit 26 may be implemented partly in hardware and partly in software/firmware.

Fig. 3 is a schematic illustration of a communication partner unit 18 according to an example.

The communication partner unit 18 comprises a receiving unit 28, which may be adapted to receive, in the initialization phase, the initializing communication from the industrial controller system 12 over the communication link 20 for establishing the bidirectional communication channel between the communication partner unit 18 and the industrial controller system 12.

The communication partner unit 18 and/or the receiving unit 28 may be adapted to switch from a server functionality with respect to the industrial controller system 12 in the initialization phase to a client functionality with respect to the industrial controller system 12 in the operation phase. In the operation phase, the communication partner unit 18 may be adapted to address the industrial controller system 12 via the established communication channel.

In some examples, the communication partner unit 18 and/or the receiving unit 28 may be implemented in hardware. However, the communication partner unit 18 and/or the receiving unit 28 may also be implemented in software or firmware, or in a combination of hardware and software/firmware.

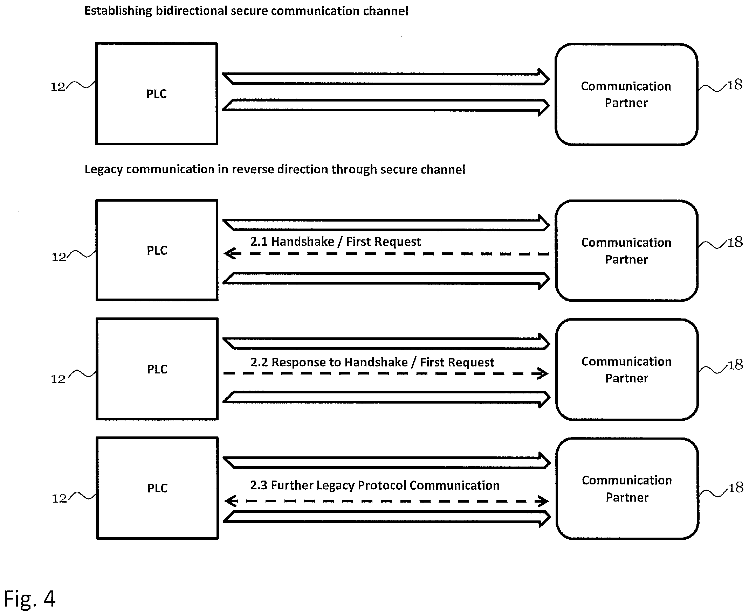

Fig. 4 is a schematic flow diagram that illustrates a sequence of steps for establishing a bidirectional secure communication channel and reverting to a legacy communication in the reverse direction, according to an embodiment. Time proceeds from top to bottom in Fig. 4.

In a first step illustrated in the topmost line of Fig. 4, the bidirectional secure communication channel between the industrial controller system 12 and communication partner unit 18 is established as described above with reference to Figs. 1 to 3. The initializing communication in this step, which corresponds to the initialization phase, is from the programmable logic controller unit (PLC) of the industrial controller system 12 to the communication partner unit 18.

The subsequent steps for exchanging the client and server roles and reverting to the communication direction of the legacy protocol are illustrated in the lower three lines of Fig. 4 and mark the transition to the operation phase. These steps may be implemented by means of a handshake or other means of connection and session establishment for the legacy protocol. This may require slightly modified implementations of the connection endpoints of the existing protocols or software. Alternatively, reversing the communication may be achieved using proxy or tunnel endpoints, which tunnel the communication between the (preferably internal/non-public) endpoints of the non-modified legacy protocols on one or both ends of the communication. The proxy may be internal or external to the industrial controller system 12 and communication partner unit 18, and may also be shared between multiple systems.

In additional detail and as illustrated in the second step of Fig. 4, the communication partner unit 18 may, for transition to the operation phase, send a handshake request to the industrial controller system 12. The industrial controller system 12 may respond to the handshake request (third step in Fig. 4), thereby establishing bidirectional communication between the industrial controller system 12 and communication partner unit 18 according to the legacy protocol communication (fourth step in Fig. 4). The details of the handshake mechanism may be specific to the legacy protocol.

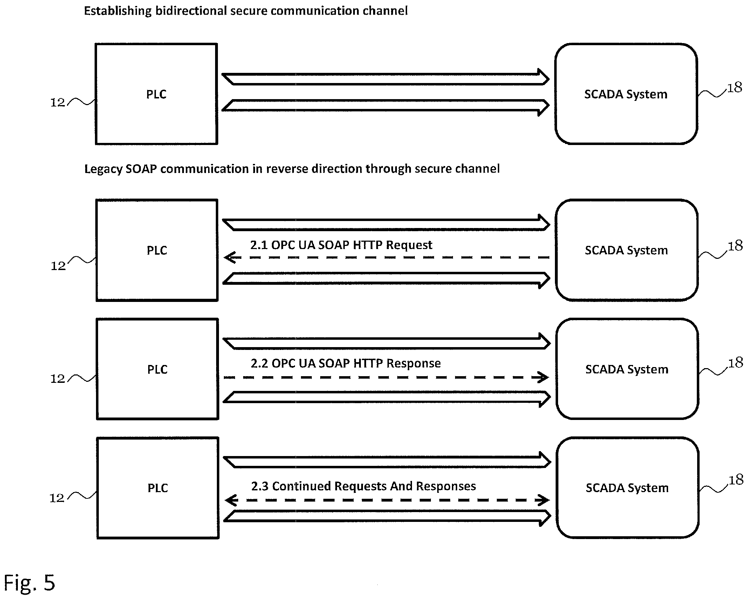

Fig. 5 is a flow diagram that largely corresponds to the diagram described above with reference to Fig. 4, but for the specific example in which the communication partner unit 18 is a supervisory control and data acquisition (SCADA) system for monitoring the industrial controller system 12, and the communication between the industrial controller system 12 and the SCADA system employs the OPC UA protocol.

In the example of Fig. 5, the industrial controller system 12 may open a TCP connection to the SCADA system 18. When the connection has been established, the industrial controller system 12 then acts as an OPC UA server, while the SCADA system 18 acts as an OPC UA client to query and collect process variables from the server 12.

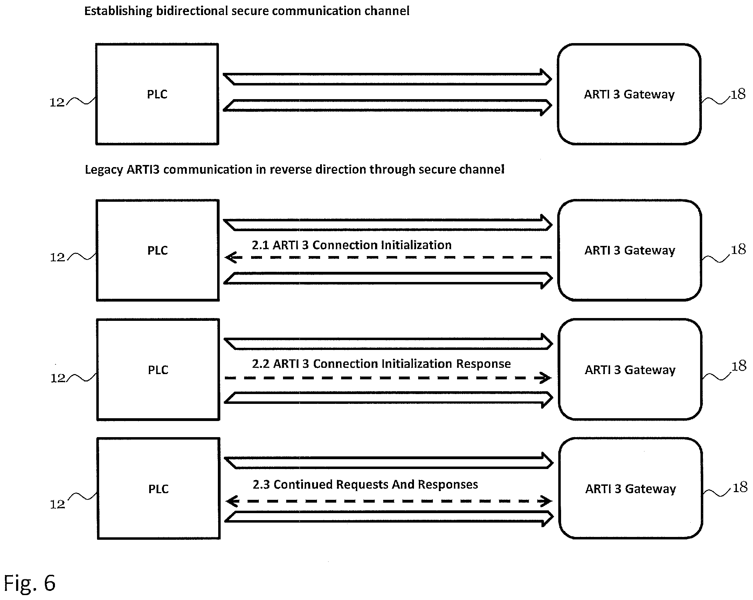

Fig. 6 is a flow diagram that is similar to the flow diagram of Fig. 5, but for an application in which the communication partner unit 18 is an ARTI3 gateway for software download and debugging, and the legacy communication is according to the ARTI3 protocol.

As shown in Fig. 6, the industrial controller system 12 opens a TCP connection to the ARTI3 gateway 18 in the initialization phase. In the operation phase, the gateway 18 then uses this TCP connection to send and receive and ARTI3 packets for the industrial controller system 12.

The flow diagram of Fig. 7 shows another ARTI3 application, but for a scenario in which the communication partner unit 18 is a remote industry 4.0 cloud server or development system that has no direct access to a local industrial control network, for security reasons.

In this scenario, the industrial controller system 12 may comprise a plurality of industrial controller units 12₁, 12₂, 12₃ wherein each of the industrial controller units 12₁, 12₂, 12₃ may be provided with a memory (not shown) and processor (not shown) for storing and running an industrial control program. For instance, with reference to Fig. 1, each of the industrial controller units 12₁, 12₂, 12₃ may be adapted to control a dedicated corresponding machinery or factory process 16₁, 16₂, 16₃.

As can be further taken from Fig. 7, the industrial controller system 12 additionally comprises a gateway unit 30, such as an ARTI3 gateway. The gateway unit 30 may be adapted to communicate, via a local controller network (not shown), with the industrial controller units 12₁, 12₂, 12₃. The gateway unit 30 may additionally comprise a gateway tunnel endpoint 32, such as an ARTI tunnel endpoint, for communicating with the development system 18 via the communication link 20.

In the configuration of Fig. 7, even though the development server 18 does not have direct access to the local industrial control network or industrial controller units 12₁, 12₂, 12₃, the development system 18 may communicate with the industrial controller units 12₁, 12₂, 12₃ through a tunneled connection to the gateway unit 30.

Conventionally, the connection would be established by initiative of the development system 18 to the gateway unit 30. However, according to the techniques of the present disclosure, it is rather the gateway unit 30 that establishes the bidirectional communication channel to the development system 18 in the initialization phase (topmost line of Fig. 7). In the subsequent operation phase, the communication is reversed according to the ARTI3 protocol, and the development system 18 serves as a client whereas the industrial controller system 12/gateway unit 30 has the server functionality.

As can be taken from Fig. 7, the communication may comprise both network scans in the local industrial control network, to discover unknown industrial controller units 12₁, 12₂, 12₃, as well as targeted communication with specific industrial controller units 12₁, 12₂, 12₃ through the gateway unit 30.

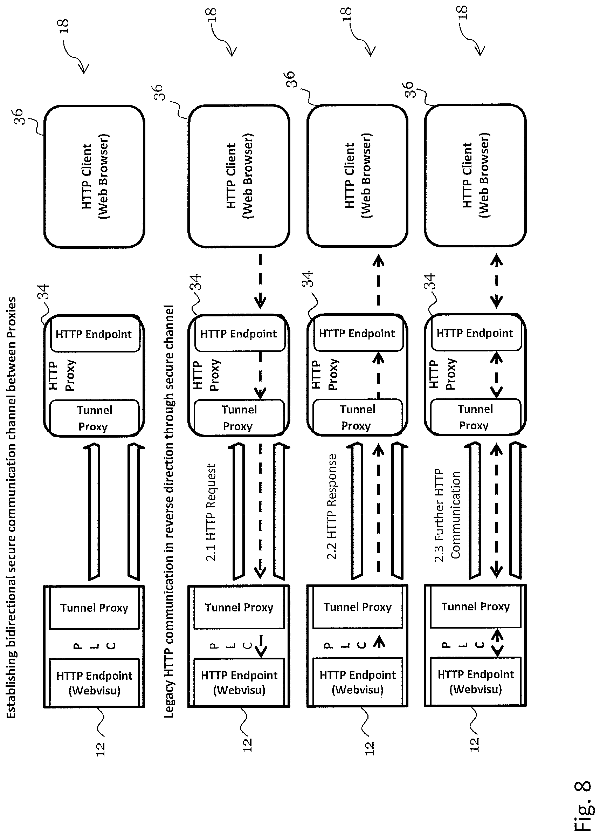

Fig. 8 shows an example of a flow diagram for applications allowing guarded access to a web visualization by means of a HTTP protocol.

In the configuration of Fig. 8, the communication partner unit 18 comprises a proxy server unit 34, such as a HTTP proxy server, as well as an HTTP client unit 36, such as a web browser.

In the example illustrated in Fig. 8, the industrial controller system 12 opens a TLS-secured TCP connection crossing a firewall to the HTTP proxy server unit 34 in the initialization phase. In the subsequent operation phase, the HTTP proxy server unit 34 then forwards incoming HTTP requests via the TCP connection to the industrial controller system 12, such as to a web visualization running on the industrial controller system 12.

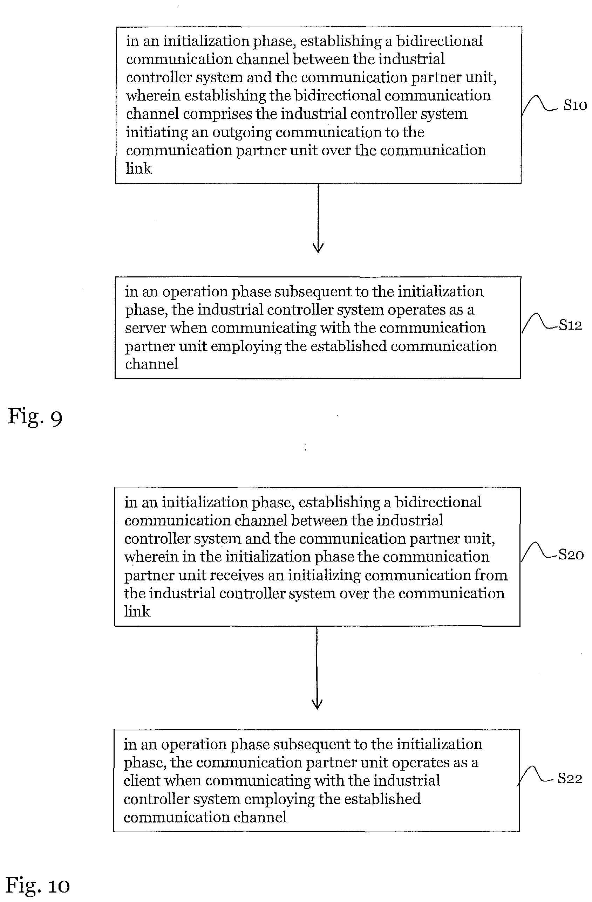

Fig. 9 is a flow diagram illustrating a method for establishing a secure communication between an industrial controller system and a communication partner unit from the perspective of the industrial controller system.

In an initialization phase S10, a bidirectional communication channel between the industrial controller system and the communication partner unit is established, wherein establishing the bidirectional communication channel comprises the industrial controller system initiating an outgoing communication to the communication partner unit over the communication link.

In a subsequent operation phase S12, the industrial controller system operates as a server when communicating with the communication partner unit employing the established communication channel.

Fig. 10 is a flow diagram illustrating a method for establishing a secure communication channel between the industrial controller system and the communication partner unit from the complementary perspective of the communication partner unit.

In an initialization phase S20, a bidirectional communication channel between the industrial controller system and the communication partner is established, wherein in the initialization phase the communication partner unit receives an initializing communication from the industrial controller system over the communication link.

In the subsequent operation phase S22, the communication partner unit operates as a client device when communicating with the industrial controller system employing the established communication channel.

In some examples, control applications may require more than one communication channels, wherein each of the communication channels is secured as described with reference to Figs. 1-10.

For instance, some applications running on an industrial controller system 12 may have strict requirements for recording process data. This is particularly true for industrial control processes in the chemical or pharmaceutical industries. In this case, a configuration may mandate two-out-of-three connections of an industrial controller system 12 to three different archival systems or databases. In the initialization phase, the industrial controller system 12 may connect to these three different archival systems to establish three corresponding bidirectional communication channels. In the subsequent operation phase, the archival systems may then fetch and archive the process data from the industrial controller system 12 via OPC UA subscriptions, similar to the process described above with reference to the flow diagram of Fig. 5.

Intermittent failures may be caught by reconnecting local buffers. As soon as two or all three of the established communication channels fail for long enough that the buffers on the industrial controller system 12 fill up, the industrial controller system 12 may shut down into a defined safe mode, to prevent loss of data and further damage. The process may then revert to the initialization phase to allow the industrial controller system 12 to re-establish the bidirectional communication channels to the archival systems.

In a variant of the configuration described above with reference to Figs. 1 to 10, the industrial controller system 12 may be adapted to switch between a first operating mode in which it blocks any incoming communication over the communication link in the initialization phase, and a second operating mode, in which the industrial controller system 12 is adapted to accept an incoming communication in the initialization phase upon receiving a user instruction. This second operating mode may be helpful in a commissioning phase. When all the connection parameters are configured in the industrial controller system 12, it may be switched back into the first operating mode. From that point onwards, the industrial controller system 12 may no longer accept any incoming connections, and only connects to the configured communication partners, such as after a reboot or connection loss.

In some examples, the industrial controller system 12 may be adapted to switch to the second operating mode upon a user instruction received remotely via a data connection, or through direct user input, such as by means of a control button on the industrial controller system 12.

The description and the Figures merely serve to illustrate the invention and the numerous advantages associated therewith, but should not be understood to imply any limitation. The scope of the invention is to be determined from the appended claims.

## Claims

1. A method for establishing a secure communication between an industrial controller system (12; 12₁, 12₂, 12₃) and a communication partner unit (18) over a communication link (20), the method comprising:
in an initialization phase, establishing a bidirectional communication channel between the industrial controller system (12; 12₁, 12₂, 12₃) and the communication partner unit (18), wherein establishing the bidirectional communication channel comprises the industrial controller system (12; 12₁, 12₂, 12₃) initiating an outgoing communication to the communication partner unit (18) over the communication link (20); and
in an operation phase subsequent to the initialization phase, the industrial controller system (12; 12₁, 12₂, 12₃) operating as a server when communicating with the communication partner unit (18) employing the bidirectional communication channel established in the initialization phase;
wherein, in the operation phase, the industrial controller system (12; 12₁, 12₂, 12₃) accepts an incoming communication that pertains to the established bidirectional communication channel; and
wherein, in the operation phase, the industrial controller system (12; 12₁, 12₂, 12₃) blocks any incoming communication that does not pertain to an established bidirectional communication channel.

2. The method according to claim 1, wherein the industrial controller system (12; 12₁, 12₂, 12₃) operates as a client when communicating with the communication partner unit (18) in the initialization phase.

3. The method according to any of the preceding claims, wherein in the initialization phase the industrial controller system (12; 12₁, 12₂, 12₃) accepts an incoming communication only upon receiving a user instruction.

4. The method according to any of the preceding claims, comprising switching the industrial controller system (12; 12₁, 12₂, 12₃) from a client functionality in the initialization phase to a server functionality in the operation phase.

5. The method according to any of the preceding claims, wherein the industrial controller system (12; 12₁, 12₂, 12₃) selects the communication partner unit (18) according to an instruction, and initiates the outgoing communication to the selected communication partner unit (18).

6. A computer program comprising computer-readable instructions, wherein the computer-readable instructions are adapted, when read on a computer, to implement a method according to any of the preceding claims.

7. An industrial controller system (12; 12₁, 12₂, 12₃), comprising:
a communication unit (24) adapted to establish a bidirectional communication channel to a communication partner unit (18) in an initialization phase by initiating an outgoing communication to the communication partner unit (18) over a communication link (20);
wherein the industrial controller system (12; 12₁, 12₂, 12₃) is adapted to operate as a server when communicating with the communication partner unit (18) employing the bidirectional communication channel established in the initialization phase, in an operation phase subsequent to the initialization phase;
wherein the industrial controller system (12; 12₁, 12₂, 12₃) is adapted to, in the operation phase, accept an incoming communication that pertains to the established bidirectional communication channel; and
wherein the industrial controller system (12; 12₁, 12₂, 12₃) is further adapted to, in the operation phase, block any incoming communication that does not pertain to an established bidirectional communication channel.

8. The industrial controller system (12; 12₁, 12₂, 12₃) according to claim 7, wherein, in a first operating mode, the communication unit (24) is adapted to block any incoming communication over the communication link (20) in the initialization phase.

9. The industrial controller system (12; 12₁, 12₂, 12₃) according to claim 7 or 8, wherein, in a second operating mode, the communication unit (24) is adapted to accept an incoming communication in the initialization phase only upon receiving a user instruction.

10. The industrial controller system (12; 12₁, 12₂, 12₃) according to any of the claims 7 to 9, further comprising a selection unit (26), wherein the selection unit (26) is adapted to select the communication partner unit (18) according to an instruction, in particular according to a pre-stored instruction or an instruction received from a user.

11. An industrial control communication environment (22), comprising the industrial controller system (12; 12₁, 12₂, 12₃) according to any of the claims 7 to 10 and the communication partner unit (18);
wherein the communication partner unit (18) comprises:
a receiving unit (28) adapted to receive, in the initialization phase, an initializing communication from the industrial controller system (12; 12₁, 12₂, 12₃) over the communication link (20) for establishing the bidirectional communication channel between the communication partner unit (18) and the industrial controller system (12; 12₁, 12₂, 12₃); and
wherein the communication partner unit (18) is adapted to operate as a client when communicating with the industrial controller system (12; 12₁, 12₂, 12₃) employing the bidirectional communication channel established in the initialization phase, in the operation phase subsequent to the initialization phase.

## Patentansprüche

1. Verfahren zum Einrichten einer sicheren Kommunikation zwischen einem industriellen Steuerungssystem (12; 12₁, 12₂, 12₃) und einer Kommunikationspartnereinheit (18) über eine Kommunikationsverbindung (20), wobei das Verfahren umfasst:
in einer Initialisierungsphase, Einrichten eines bidirektionalen Kommunikationskanals zwischen dem industriellen Steuerungssystem (12; 12₁, 12₂, 12₃) und der Kommunikationspartnereinheit (18), wobei das Einrichten des bidirektionalen Kommunikationskanals umfasst, dass das industrielle Steuerungssystem (12; 12₁, 12₂, 12₃) eine ausgehende Kommunikation an die Kommunikationspartnereinheit (18) über die Kommunikationsverbindung (20) einleitet; und
in einer Betriebsphase nach der Initialisierungsphase, Arbeiten des industriellen Steuerungssystems (12; 12₁, 12₂, 12₃) als ein Server, wenn es mit der Kommunikationspartnereinheit (18) unter Verwendung des in der Initialisierungsphase eingerichteten bidirektionalen Kommunikationskanals kommuniziert;
wobei, in der Betriebsphase, das industrielle Steuerungssystem (1212₁, 12₂, 12₃) eine eingehende Kommunikation akzeptiert, die dem eingerichteten bidirektionalen Kommunikationskanal zugeordnet ist; und
wobei, in der Betriebsphase, das industrielle Steuerungssystem (12; 12₁, 12₂, 12₃) jegliche eingehende Kommunikation blockiert, die nicht einem eingerichteten bidirektionalen Kommunikationskanal zugeordnet ist.

2. Verfahren nach Anspruch 1, wobei das industrielle Steuerungssystem (12; 12₁, 12₂, 12₃) als ein Client arbeitet, wenn es mit der Kommunikationspartnereinheit (18) in der Initialisierungsphase kommuniziert.

3. Verfahren nach einem der vorhergehenden Ansprüche, wobei in der Initialisierungsphase das industrielle Steuerungssystem (12; 12₁, 12₂, 12₃) eine eingehende Kommunikation nur bei Empfang einer Benutzeranweisung akzeptiert.

4. Verfahren nach einem der vorhergehenden Ansprüche, umfassend ein Umschalten des industriellen Steuerungssystems (12; 12₁, 12₂, 12₃) von einer Clientfunktionalität in der Initialisierungsphase zu einer Serverfunktionalität in der Betriebsphase.

5. Verfahren nach einem der vorhergehenden Ansprüche, wobei das industrielle Steuerungssystem (12; 12₁, 12₂, 12₃) die Kommunikationspartnereinheit (18) gemäß einer Anweisung auswählt und die ausgehende Kommunikation an die ausgewählte Kommunikationspartnereinheit (18) einleitet.

6. Computerprogramm, umfassend computerlesbare Anweisungen, wobei die computerlesbaren Anweisungen dazu eingerichtet sind, wenn sie auf einem Computer gelesen werden, ein Verfahren nach einem der vorhergehenden Ansprüche zu implementieren.

7. Industrielles Steuerungssystem (12; 12₁, 12₂, 12₃), umfassend:
eine Kommunikationseinheit (24), die dazu eingerichtet ist, einen bidirektionalen Kommunikationskanal an eine Kommunikationspartnereinheit (18) in einer Initialisierungsphase durch Einleiten einer ausgehenden Kommunikation an die Kommunikationspartnereinheit (18) über eine Kommunikationsverbindung (20) einzurichten;
wobei das industrielle Steuerungssystem (12; 12₁, 12₂, 12₃) dazu eingerichtet ist, als ein Server zu arbeiten, wenn es mit der Kommunikationspartnereinheit (18) unter Verwendung des in der Initialisierungsphase eingerichteten bidirektionalen Kommunikationskanals in einer Betriebsphase nach der Initialisierungsphase kommuniziert;
wobei das industrielle Steuerungssystem (12; 12₁, 12₂, 12₃) dazu eingerichtet ist, in der Betriebsphase eine eingehende Kommunikation zu akzeptieren, die dem eingerichteten bidirektionalen Kommunikationskanal zugeordnet ist; und
wobei das industrielle Steuerungssystem (12; 12₁, 12₂, 12₃) ferner dazu eingerichtet ist, in der Betriebsphase jegliche eingehende Kommunikation zu blockieren, die nicht einem eingerichteten bidirektionalen Kommunikationskanal zugeordnet ist.

8. Industrielles Steuerungssystem (12; 12₁, 12₂, 12₃) nach Anspruch 7, wobei, in einem ersten Betriebsmodus, die Kommunikationseinheit (24) dazu eingerichtet ist, jegliche eingehende Kommunikation über die Kommunikationsverbindung (20) in der Initialisierungsphase zu blockieren.

9. Industrielles Steuerungssystem (12; 12₁, 12₂, 12₃) nach Anspruch 7 oder 8, wobei in einem zweiten Betriebsmodus die Kommunikationseinheit (24) dazu eingerichtet ist, eine eingehende Kommunikation in der Initialisierungsphase nur bei Empfang einer Benutzeranweisung zu akzeptieren.

10. Industrielles Steuerungssystem (12; 12₁, 12₂, 12₃) nach einem der Ansprüche 7 bis 9, ferner umfassend eine Auswahleinheit (26), wobei die Auswahleinheit (26) dazu eingerichtet ist, die Kommunikationspartnereinheit (18) gemäß einer Anweisung, insbesondere gemäß einer vorgespeicherten Anweisung oder einer von einem Benutzer empfangenen Anweisung, auszuwählen.

11. Industrielle Steuerungskommunikationsumgebung (22), umfassend das industrielle Steuerungssystem (12; 12₁, 12₂, 12₃) nach einem der Ansprüche 7 bis 10 und die Kommunikationspartnereinheit (18);
wobei die Kommunikationspartnereinheit (18) umfasst:
eine Empfangseinheit (28), die dazu eingerichtet ist, in der Initialisierungsphase eine Initialisierungskommunikation von dem industriellen Steuerungssystem (12; 12₁, 12₂, 12₃) über die Kommunikationsverbindung (20) zum Einrichten des bidirektionalen Kommunikationskanals zwischen der Kommunikationspartnereinheit (18) und dem industriellen Steuerungssystem (12; 12₁, 12₂, 12₃) zu empfangen; und
wobei die Kommunikationspartnereinheit (18) dazu eingerichtet ist, als ein Client zu arbeiten, wenn sie mit dem industriellen Steuerungssystem (12; 12₁, 12₂, 12₃) unter Verwendung des in der Initialisierungsphase eingerichteten bidirektionalen Kommunikationskanals in der Betriebsphase nach der Initialisierungsphase kommuniziert.

## Revendications

1. Procédé d'établissement d'une communication sécurisée entre un système de contrôleur industriel (12 ; 12₁, 12₂, 12₃) et une unité de partenaire de communication (18) sur une liaison de communication (20), le procédé comprenant les étapes ci-dessous consistant à ou dans lesquelles :
au cours d'une phase d'initialisation, établir un canal de communication bidirectionnelle entre le système de contrôleur industriel (12 ; 12₁, 12₂, 12₃) et l'unité de partenaire de communication (18), dans lequel l'étape d'établissement du canal de communication bidirectionnelle comprend l'étape dans laquelle le système de contrôleur industriel (12 ; 12₁, 12₂, 12₃) initie une communication sortante vers l'unité de partenaire de communication (18) sur la liaison de communication (20) ; et
au cours d'une phase d'exploitation subséquente à la phase d'initialisation, le système de contrôleur industriel (12 ; 12₁, 12₂, 12₃) opère en qualité de serveur lorsqu'il communique avec l'unité de partenaire de communication (18), en employant le canal de communication bidirectionnelle établi au cours de la phase d'initialisation ;
dans lequel, au cours de la phase d'exploitation, le système de contrôleur industriel (12 ; 12₁, 12₂, 12₃) accepte une communication entrante qui se rapporte au canal de communication bidirectionnelle établi ; et
dans lequel, au cours de la phase d'exploitation, le système de contrôleur industriel (12 ; 12₁, 12₂, 12₃) bloque toute communication entrante qui ne se rapporte pas à un canal de communication bidirectionnelle établi.

2. Procédé selon la revendication 1, dans lequel le système de contrôleur industriel (12 ; 12₁, 12₂, 12₃) opère en qualité de client lorsqu'il communique avec l'unité de partenaire de communication (18) au cours de la phase d'initialisation.

3. Procédé selon l'une quelconque des revendications précédentes, dans lequel, au cours de la phase d'initialisation, le système de contrôleur industriel (12 ; 12₁, 12₂, 12₃) accepte une communication entrante uniquement suite à la réception d'une instruction utilisateur.

4. Procédé selon l'une quelconque des revendications précédentes, comprenant l'étape consistant à commuter le système de contrôleur industriel (12 ; 12₁, 12₂, 12₃) d'une fonctionnalité client, au cours de la phase d'initialisation, à une fonctionnalité serveur au cours de la phase d'exploitation.

5. Procédé selon l'une quelconque des revendications précédentes, dans lequel le système de contrôleur industriel (12 ; 12₁, 12₂, 12₃) sélectionne l'unité de partenaire de communication (18) selon une instruction, et initie la communication sortante vers l'unité de partenaire de communication sélectionnée (18).

6. Programme informatique comprenant des instructions lisibles par ordinateur, dans lequel les instructions lisibles par ordinateur sont aptes, lorsqu'elles sont lues sur un ordinateur, à mettre en oeuvre un procédé selon l'une quelconque des revendications précédentes.

7. Système de contrôleur industriel (12 ; 12₁, 12₂, 12₃), comprenant :
une unité de communication (24) apte à établir un canal de communication bidirectionnelle vers une unité de partenaire de communication (18) au cours d'une phase d'initialisation, en initiant une communication sortante vers l'unité de partenaire de communication (18) sur une liaison de communication (20) ;
dans lequel le système de contrôleur industriel (12 ; 12₁, 12₂, 12₃) est apte à opérer en qualité de serveur lorsqu'il communique avec l'unité de partenaire de communication (18), en employant le canal de communication bidirectionnelle établi au cours de la phase d'initialisation, au cours d'une phase d'exploitation subséquente à la phase d'initialisation ;
dans lequel le système de contrôleur industriel (12 ; 12₁, 12₂, 12₃) est apte à, au cours de la phase d'exploitation, accepter une communication entrante qui se rapporte au canal de communication bidirectionnelle établi ; et
dans lequel le système de contrôleur industriel (12 ; 12₁, 12₂, 12₃) est en outre apte à, au cours de la phase d'exploitation, bloquer toute communication entrante qui ne se rapporte pas à un canal de communication bidirectionnelle établi.

8. Système de contrôleur industriel (12 ; 12₁, 12₂, 12₃) selon la revendication 7, dans lequel, dans un premier mode d'exploitation, l'unité de communication (24) est apte à bloquer toute communication entrante sur la liaison de communication (20) au cours de la phase d'initialisation.

9. Système de contrôleur industriel (12 ; 12₁, 12₂, 12₃) selon la revendication 7 ou 8, dans lequel, dans un second mode d'exploitation, l'unité de communication (24) est apte à accepter une communication entrante au cours de la phase d'initialisation, uniquement suite à la réception d'une instruction utilisateur.

10. Système de contrôleur industriel (12 ; 12₁, 12₂, 12₃) selon l'une quelconque des revendications 7 à 9, comprenant en outre une unité de sélection (26), dans lequel l'unité de sélection (26) est apte à sélectionner l'unité de partenaire de communication (18) selon une instruction, en particulier selon une instruction stockée au préalable ou selon une instruction reçue en provenance d'un utilisateur.

11. Environnement de communication de commande industrielle (22), comprenant le système de contrôleur industriel (12 ; 12₁, 12₂, 12₃) selon l'une quelconque des revendications 7 à 10 et l'unité de partenaire de communication (18) ;
dans lequel l'unité de partenaire de communication (18) comprend :
une unité de réception (28) apte à recevoir, au cours de la phase d'initialisation, une communication d'initialisation en provenance du système de contrôleur industriel (12 ; 12₁, 12₂, 12₃) sur la liaison de communication (20), pour établir le canal de communication bidirectionnelle entre l'unité de partenaire de communication (18) et le système de contrôleur industriel (12 ; 12₁, 12₂, ; et
dans lequel l'unité de partenaire de communication (18) est apte à opérer en qualité de client lorsqu'elle communique avec le système de contrôleur industriel (12 ; 12₁, 12₂, 12₃), en employant le canal de communication bidirectionnelle établi au cours de la phase d'initialisation, au cours de la phase d'exploitation subséquente à la phase d'initialisation.
